# EUROPEAN PATENT APPLICATION

(11) **EP 3 444 077 A1**
(43) Date of publication of application: **20.02.2019**
(21) Application number: 17186591.8
(22) Date of filing: 17.08.2017
(51) Int. Cl.: B25J 9/16, A61B 34/30

(54) **METHOD FOR DETERMINING A CURRENT POSITION OF A ROBOT END EFFECTOR AND ROBOTIC SYSTEM**

(71) Applicant: Siemens Healthcare GmbH, 91052 Erlangen (DE)
(72) Inventor: Mönnich, Holger, 86316 Friedberg (DE)

(57) **Abstract**

The present invention refers to a method (20) for determining a current position of a robot end effector (11) of a robot (2). The method (20) comprises measuring at least one force at a robot flange of the robot (2) while the robot (2) is subjected to a mechanical tension due to contact with an external object (14). Based on the measured force at least one external moment affecting the robot (2) is then computed. Based on the at least one computed external moment and the at least one measured force a positional correction factor for the end effector (11) is computed. After that, the current position of the end effector (11) is computed based on a correction model in dependence on the correction factor, whereby the method and therefore the computed actual position take into account the mechanical tension. The invention also relates to a corresponding storage medium (18), a corresponding data processing device (3), and a corresponding robotic system (1).

## Description

The invention relates to a method for determining a current position of a robot end effector and to a corresponding robotic system. The invention further relates to a storage medium containing corresponding program code and a data processing device for determining the current position of the robot end effector.

It is common practice today to model a behaviour, that is, a movement and a resulting position or pose of a robot using a mathematical model. These models are, however, not perfectly accurate in all situations or scenarios. Typically, robots or the corresponding models are calibrated in a setting where the robot can freely move in all directions to cover a complete range of motion and possible poses. Some models might take into account an influence of gravity, which can induce a moment, in particular a moment of force or a torque in the robot, in particular in a joint of its arm. Even these models do, however, not always reliably reproduce the actual position of for example the respective robot end effector.

It is an objective of the present invention to provide a way for determining a position of a robot with improved accuracy.

A method according to the present invention is concerned with determining a current position of a robot end effector that is connected to a distal end of a jointed arm of the robot via a robot flange. A first step of this method comprises measuring at least one force at the robot flange while the robot is subjected to a mechanical tension due to contact with an external object. The external object can for example be a stationary part of an apparatus that is being assembled by the robot. If, for example, the robot is holding or carrying a gear wheel and moving to insert the gear wheel into a partly assembled gearbox or gearing mechanism, an exact orientation of the gear wheel is typically not known. This can lead to a mechanical contact between a tooth of the gear wheel and another gear wheel of the gearing mechanism, which in turn can result in the mechanical tension affecting the robot. Another step of the method comprises computing at least one external moment affecting the robot based on the measured force. In terms of the present invention a moment can in particular refer to a moment of force or a torque. Another step of the method comprises computing a positional correction factor for the end effector based on the at least one computed external moment and the at least one measured force. The at least one computed external moment and the at least one measured force are, in other words, taken into account in computing the positional correction factor. This correction factor relates to the position of the end effector. Another step of the method comprises computing the current position of the end effector based on a correction model in dependence on the correction factor, thereby taking into account the mechanical tension. The positional correction factor can, in other words, be used to specify and/or minimise a difference between a calculated or modelled, that is, an assumed position of the end effector and its objective actual position.

The end effector is in accordance with the usual sense of the word in the field of robotics the last element, member, or device in a kinematic chain comprising the jointed arm as well as the end effector. The jointed arm and the end effector can together also be denoted as a robot manipulator or a manipulator of the robot. The end effector can for example be a gripping device or a tool fitted to or held by a corresponding receptacle. The distal end at which the end effector is located or arranged forms one end of the jointed arm, while its other end is formed by or connected to a foot or base of the robot. This foot or base can in particular be stationary with respect to a surrounding of the robot, while the manipulator, that is the jointed arm and the end effector, can move around with respect to the foot or base of the robot. The position of the end effector can also be denoted as or refer to a tool centre point (TCP) or a position of this tool centre point.

The measured force can for example be measured using a force sensor. Advantageously the force sensor can measure multiple forces acting in different directions or dimensions. Alternatively, multiple force sensors can be provided or used with each force sensor taking measurements of force in one particular direction. The measured values or data can be provided to a data processing device, which computes the at least one external moment, the positional correction factor, and the current position of the end effector.

The mechanical tension or tensioning can be a mechanical stress or pressure influencing, in particular hindering, limiting or restricting, a movement or motion of the end effector, the jointed arm or a part thereof.

Computing the external moment, the positional correction factor, and/or the current position of the end effector can comprise one or more calculations and/or one or more evaluations each. It can also comprise automatically retrieving any needed parameters or respective current values, such as for example a respective joint parameter for each joint of the jointed arm, and/or reading corresponding values from a predetermined provided table or characteristic diagram. The respective computing or computation can advantageously be carried out or executed automatically. It can be especially advantageous if this is done continuously or with a predetermined frequency so that the respective current position of the end effector is computed and therefore known while the robot is moving. To enable the automatic computing or computation of the at least one external moment, the positional correction factor, and/or the current position of the end effector a respective predetermined model can be provided.

It is a particular advantage of the present invention that the mechanical tension and the corresponding at least one external moment can be taken into account for determining the current position of the end effector more precisely without the need for moment sensors in each joint or at each link of the jointed arm. The improved precision of the computed current position of the end effector is in itself an obvious advantage but can also advantageously form a basis for any number of other applications that rely on precise knowledge of the current position of the end effector. A more precise modelling and knowledge of the current position of the end effector can, for example, allow for a higher degree of automation in complex assembly tasks and/or a lowered risk of damaging the respective assembly or the robot.

In an advantageous development of the present invention the measured force is measured using a 6-degrees-of-freedom (6-DOF) force sensor attached to or integrated into the robot flange. A 6-DOF force sensor can measure a force in any spatial direction. The measurements of force necessary for computing the current position of the end effector using the method described herein are, in other words, measured using a single force sensor or a single force sensor assembly or device. Since only a single sensor or sensor socket is needed, this advantageously reduces a complexity of the required cabling or wiring and of the robot as a whole. It can also reduce cost.

In an advantageous development of the present invention the measured force is provided as an input to an absolute accurate model of the robot in order to compute the external moment. This absolute accurate model processes this input and provides as a corresponding output at least one calculated moment. The absolute accurate model can be a conventional model that does not take into account any external moments or any mechanical tension to which the robot might be subjected. Since the calculated moment is determined using the model and its assumptions or simplifications, it typically is not fully accurate. This means that it does not fully reflect reality, in particular when the robot is subjected to the mechanical tension. The calculated moment is, in other words, a calculated and therefore assumed moment affecting the robot and can differ from an objective, actual moment. Depending on the model the calculated moment can be determined for the end effector or TCP and/or for each joint of the jointed arm or the robot. The absolute accurate model can, in other words, allow for calculating a current active or effective moment, in particular a torque, for each joint and/or link. Even though this calculated moment or these calculated moments are likely to differ from the real or actual moment - due to the absolute accurate model not taking into account the mechanical tension affecting the robot - it can still be a useful value since it describes the expected behaviour for state of the robot without any additional external influences and can therefore be calculated very easily and reliably.

The absolute accurate model can, however, take into account essentially constant or static effect such as gravitational effects since these are only dependent on the constant gravitational force of the earth. Effects of the mechanical tension or any external moments can in practice not be modelled a priori since they depend on a respective situation and can therefore vary through a wide variety of values and vectors.

In an advantageous development of the present invention at least one computed actual moment affecting at least one axis or joint of the arm is computed by multiplying the geometric Jacobian matrix - or, depending on a chosen form or notation, its transpose - for the arm with the at least one measured force, that is the respective force vector. Multiplying the force measured at the robot flange and the geometric Jacobian matrix can be thought of as projecting the measured force into the joints of the arm. This approach computes a respective actual moment acting in each joint based on the measured force, i.e. the effective, actual force acting on or affecting the robot flange. This approach advantageously makes it possible to determine the acting actual moment, in particular torque, for each joint without having to specifically and individually measure it in each joint of the jointed robot arm.

The geometric Jacobian matrix can depend on a respective configuration of the robot, that is its position and orientation a.k.a. its pose. It can be visualised as being formed based on the tangential vectors at the axes of rotation of the manipulator. Further information about how to derive the geometric Jacobian matrix for an arbitrary jointed robot arm and the exact form of the geometric Jacobian matrix should be known to those skilled in the art and can also be gleaned from the pertinent technical literature. Simply as an exemplary reference the publication "Modelling and Control of Robot Manipulators" by Professor Lorenzo Sciavicco and Professor Bruno Siciliano might be mentioned.

In a further advantageous development of the present invention the at least one external moment is computed by subtracting the calculated moment from the computed actual moment. Since the computed actual moment is derived from the measured force at the robot flange it automatically takes into account all moments, in particular torques, affecting the robot or at least affecting the robot flange, such as any external moments as well as moments caused by a motor or drive or actuation of the robot itself. The calculated moment does, however, not take into account the external forces or influences since it is derived from a simplified model that assumes that there are no external moments affecting the robot. Therefore, the difference between the computed actual moment and the calculated moment gives the previously unknown external moment without a need to measure it directly. This approach offers a fast and easy solution to determining the external moment or moments at least in their cumulative effects. Since the subtraction is a simple mathematical operation it can advantageously be done in real-time during operation of the robot.

Overall the present invention provides a way for determining or acquiring improved Cartesian coordinates, that is, a more accurate position or pose for the end effector of the robot by taking into account the mechanical tension which can exert an external moment on the robot. In particular, this can be achieved without explicitly measuring any external moment in or for any joint or axis of the robot arm or manipulator. By measuring the actual force at the robot flange even non-geometric effects like gearing or transmission elasticities or an overturning moment, can effectively be taken into account for the determination or computation of the current position of the end effector. These effects can lead to significant positioning errors in conventional methods and models. In actual applications where the end effector or the robot is subjected to mechanical tension and comes into contact with an external object, in particular one that cannot be freely moved, a resulting error in the calculated position of the end effector with respect to its actual objective position in conventional methods can be of the order of several millimetres or even centimetres.

Another aspect of the present invention is a storage medium containing a program code designed or configured to perform a method in accordance with at least one embodiment of the method according to the present invention on execution of this program code by a processing unit.

Another aspect of the present invention is a data processing device for determining a current position of a robot end effector of a robot that is subjected to a mechanical tension due to contact with an external object. This data processing device comprises a storage medium in accordance with the present invention and a processing unit configured to execute the program code contained within the storage medium. The data processing device may also comprise an input interface for receiving the values of the measured force as well as, for example, data about a current configuration, a current rotation or state of any joint and/or axis of the robot and/or control signals sent from a control unit (ECU) to one or more drives or motors of the robot. The data processing device may also comprise an output interface for providing the computed correction factor and/or the computed current position or corresponding coordinates to another device or system.

Another aspect of the present invention is a robotic system comprising a robot, at least one force sensor, and a data processing device. The robot has a jointed arm and an end effector connected to a distal end of the arm via a robot flange. The at least one force sensor is arranged at the robot flange and configured to measure at least one force affecting the robot flange. The data processing device is a data processing device according to the present invention for determining a current position of the robot end effector, in particular while the robot is subjected to a mechanical tension. The data processing device therefore comprises a storage medium according to the present invention containing a program code designed to perform a method in accordance with the present invention. To execute this program code the data processing device comprises a processing unit which itself can, for example, comprise one or more computer-or microchips.

In an advantageous development of the robotic system in accordance with the present invention the robot is an industrial robot and has at least 6 degrees of freedom (DOF).

In a further advantageous development of the robotic system in accordance with the present invention the force sensor is a 6-degrees-of-freedom force sensor.

The embodiments and developments of the present invention described herein for at least one aspect of the present invention, that is, for the method, the storage medium, the data processing device, and the robotic system as well as the corresponding advantages may be applied to any and all aspects of the present invention.

Further advantages, features, and details of the present invention derive from the following description of preferred embodiments of the present invention as well as from the drawings pertaining to the present invention. The features and feature combinations previously mentioned in the description as well as the features and feature combinations mentioned in the following description of the figures and/or shown in the figures alone can be employed not only in the respectively indicated combination but also in other combinations or taken alone without leaving the scope of the present invention. In the drawings
- FIG 1: schematically shows a perspective view of a robotic system in the process of putting together an assembly; and
- FIG 2: schematically illustrates an exemplary flow chart of a method for determining a current position of a robot end effector.

The embodiments describe below are preferred embodiments of the present invention. In these embodiments the described features are independent features of the invention. These features can be used independently of each other and also in other than the explicitly described combinations without leaving the scope of the present invention. The described embodiments can also be further developed using any and all above-mentioned features of the invention.

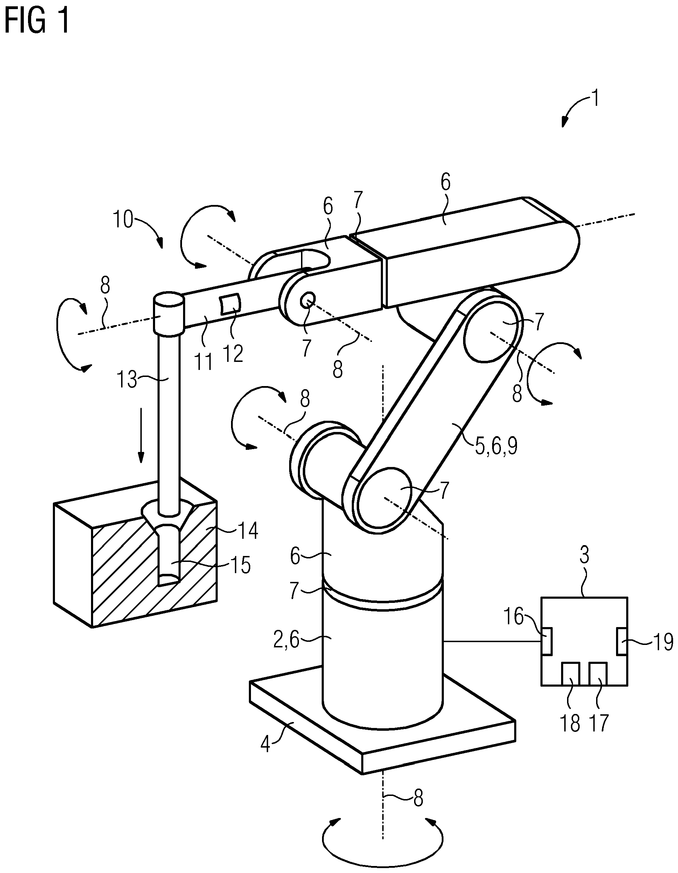

FIG 1 schematically shows a perspective view of a robotic system 1. The robotic system 1 comprises a robot 2 and a data processing device 3 which is connected to the robot 2 via a data link. While the robot 2 and the data processing device 3 are shown separately, the data processing device 3 can also be integrated into the robot 2.

Presently, the robot 2 is an industrial robot with a foot or base 4 which can be mounted in a fixed location such as a floor of an industrial workspace or an operating room. Attached to the base 4 is a manipulator 5 of the robot 2. The manipulator 5 is formed by several links 6 and several joints 7 connecting the links 6. Each joint 7 enables rotation of a respective connected link 6 about a corresponding axis 8. In other examples different types of joints or connections, such as for example prismatic joints, can also be used as part of the manipulator 5 or the robot 2, respectively. The links 6 and joints 7 form a robotic jointed arm 9. As part of the manipulator 5 and arranged at a distal end 10 of the arm 9 the robot 2 further comprises an end effector 11. The end effector 11 is connected to the arm 9 via a robot flange. Arranged in or at this robot flange is a 6-DOF force sensor 12 which can measure forces acting in six different spatial directions.

Presently, the end effector 11 comprises a gripping or holding mechanism or device which in this example is holding a rigid rod 13. Since the rod 13 is rigidly held, it can also be considered part of the end effector 11 since it effectively is the last part or element of a kinematic chain formed by the manipulator 5 and beginning at the base 4.

In the situation shown here the robot 2 is in the process of setting the rod 13 into a stationary external object 14. In particular, the robot 2 is tasked with inserting the rod 13 into a receptacle 15 of the external object 14. At the presently shown stage the rod 13 has come into contact with the external object 14 resulting in subjecting the robot 2 to a mechanical tension. The unintended mechanical contact between the rod 13 and the external object 14 can for example be caused by an unknown or imprecise orientation of the external object 14 and/or of the rod 13, which can have a complex cross-section. The contact can also be caused by geometric positioning errors of the robot 2, and/or by non-geometric effects affecting the precision with which the robot 2 - in particular the end effector 11 - are positioned with respect to an external reference frame, for example with respect to the external object 14.

Since this mechanical contact and the resulting mechanical tension may be unintended and cannot be precisely foreseen, it can result in a positioning error, that is, a difference between a calculated or assumed position of the end effector 11 and its actual position in space at a given point in time.

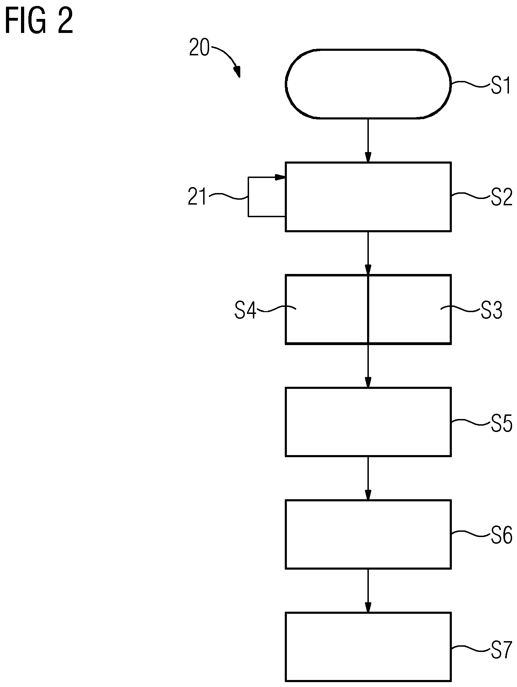

FIG 2 schematically shows an exemplary flow chart 20 illustrating a method for determining the actual current position of the end effector 11 of the robot 2 shown in FIG 1, in particular while the robot 2 is subjected to the mechanical tension due to rigid contact with the external object 14. Below, the process steps of this method are described with reference to both FIG 1 and FIG 2.

The method starts and a process step S1. Here, the robot 2 and the data processing device 3 can, for example, be activated. Alternatively, the process step S1 can be set to the point in time when the robot 2 is subjected to the mechanical tension, that is, when the mechanical contact with the external object 14 occurs.

In a process step S2 the 6-DOF force sensor 12 measures the force or forces affecting the robot 2 at the end effector 11. This measurement can be carried out continuously as is presently indicated by a loop 21. The measured force value or values are transmitted in real time from the 6-DOF force sensor 12 to the data processing device 3 which receives them through an input interface 16.

In a process step S3 the received measured values are processed by a processing unit (CPU) 17 of the data processing device 3. In particular, the received force values are provided or used as an input for a model of the robot 2. Through processing the input values this model provides as an output one or more calculated moments, in particular one or more torque value and vectors. These calculated moments are consistent with the measured force values in terms of the used model but only reflect the actual moments affecting the robot 2, that is, reality, within the limits or limited scope of the model.

In a process step S4 the geometric Jacobian matrix for the arm 9 is determined or generated and multiplied with the measured force values. Specifics of this operation may vary depending on a chosen implementation. A size or dimension of the geometric Jacobian matrix is determined by the number of degrees of freedom and the number of joints 7 of the manipulator 5. In this case, since the force sensor 12 measures force with six degrees of freedom and the manipulator 5 has six joints 7, the geometric Jacobian matrix is of dimension 6x6. As a result of the process step S4 the actual moments or torques acting in or on each of the joints 7 or axes 8 is computed. These computed values for the actual moments reflect reality to a higher degree than the calculated moments derived in process step S3. The process steps S3 and S4 can be carried out in parallel or sequentially in any order.

In a process step S5 the values of the calculated moments calculated in process step S3 are subtracted from the corresponding values of the actual moments computed in process step S4. This gives the values of any external moments acting on the robot 2 in such a way as to change or influence the values of force measured by the 6-DOF force sensor 12. In the present example the contact between the rod 13 and the external object 14 is a source of one such external moment which is not modelled in the model used in process step S3 to derive the calculated moment.

In a process step S6 a positional correction factor for the position of the end effector 11 is computed based on the external moments that have been computed in process step S5.

In a process step S7 the computed correction factor is provided or used as an input for a correction model to compute the actual position or pose, that is, the actual position and orientation, of the end effector 11. The correction model can model how the position or pose of the end effector 11 and/or the robot 2 or any of the joints 7 is affected or changed due to the influence of the mechanical tension expressed in the correction factor.

To carry out all of these calculations and computations the processing unit 17 can access a storage medium 18 of the data processing device 3. This storage medium 18 can hold or contain the necessary instructions as well as the mentioned mathematical models in the form of a program code or electronic data.

As part of the process step S7 the computed actual position of the end effector 11 may also be provided or output to any other system or device or model requiring the actual position or pose of the end effector 11 as an input.

## Claims

1. Method (20) for determining a current position of a robot end effector (11) that is connected to a distal end (10) of a jointed arm (9) of the robot (2) via a robot flange, comprising the following steps:
- measuring at least one force at the robot flange while the robot (2) is subjected to a mechanical tension due to contact with an external object (14),
- computing at least one external moment affecting the robot (2) based on the measured force,
- computing a positional correction factor for the end effector (11) based on the at least one computed external moment and the at least one measured force, and
- computing the current position of the end effector (11) based on a correction model in dependence on the correction factor, thereby taking into account the mechanical tension.

2. Method (20) in accordance with claim 1, **characterised in that** the measured force is measured using a six degrees of freedom force sensor (12) attached to or integrated into the robot flange.

3. Method (20) in accordance with any of the preceding claims, **characterised in that** to compute the external moment the measured force is provided as an input to an absolute accurate model of the robot (2) that provides as an output at least one corresponding calculated moment.

4. Method (20) in accordance with any of the preceding claims, **characterised in that** at least one computed actual moment affecting at least one axis of the arm (9) is computed by multiplying the at least one measured force with the geometric Jacobian matrix for the arm (9).

5. Method (20) in accordance with claims 3 and 4, **characterised in that** the at least one external moment is computed by subtracting the calculated moment from the actual moment.

6. Storage medium (18) containing a program code designed to perform a Method (20) in accordance with any of the preceding claims on execution by a processing unit.

7. Data processing device (3) for determining a current position of a robot end effector (11) of a robot (2) that is subjected to a mechanical tension due to contact with an external object (14), the data processing device (3) comprising a storage medium (18) in accordance with claim 6 and a processing unit configured to execute the program code contained within the storage medium (18).

8. Robotic system (1) comprising
- a robot (2) with having jointed arm (9) and an end effector (11) connected to a distal end (10) of the arm (9) via a robot flange,
- at least one force sensor (12) arranged at the robot flange for measuring at least one force affecting the robot flange,
- a data processing device in accordance with claim 7.

9. Robotic system (1) in accordance with claim 8, **characterised in that** the robot (2) is an industrial robot (2) having at least six degrees of freedom.

10. Robotic system in accordance with any of the claims 8 and 9, **characterised in that** the force sensor (12) is a six-degrees-of-freedom force sensor (12).
